# EUROPEAN PATENT APPLICATION

(11) **EP 4 207 849 A1**
(43) Date of publication of application: **05.07.2023**
(21) Application number: 21218186.1
(22) Date of filing: 29.12.2021
(51) Int. Cl.: H04W 12/069, H04W 12/50, H04W 4/80, H04W 4/35, H04W 4/029

(54) **ELECTRONIC IDENTIFICATION DEVICE AND SCANNING DEVICE FOR SCANNING THE ELECTRONIC IDENTIFICATION DEVICE**

(71) Applicant: Viloc nv, 2600 Berchem (BE)
(72) Inventor: ARITS, Maarten, B-2500 Lier (BE)
(74) Representative: IPLodge bv

(57) **Abstract**

The disclosure relates to an Electronic Identification Device, EID, comprising a first radio module configured for transmitting and receiving RF messages with a first antenna, an RF detector configured for capturing RF signals with the first antenna, and wherein the RF detector is configured for generating a trigger signal if an RF signal captured with the first antenna has a signal strength above a threshold value, and wherein when the trigger signal is generated, a computer program when executed by a processor causes the EID to perform steps of: listening for RF messages with the first radio module, decrypting an RF message when received and transmitting an encrypted RF response message with the first radio module, and wherein the RF response message comprises at least an identifier associated to the EID. The disclosure is also related to a scanning device for scanning the EID.

## Description

### Field of the disclosure

The present disclosure relates to an electronic identification device, EID, and a scanning device for scanning the EID.

### Background

An electronic identification device is to be construed as a device comprising an electronic identifier. The identifier is typically stored in a nonvolatile memory of the EID. A scanning device is a device that allows to at least wirelessly read out the identifier of the EID.

An example of an EID is a tracking device used for tracking objects. The tracking device is generally attached or inserted to the object that needs to be tracked. A tracking device typically comprises a radio module configured for transmitting at regular time intervals an RF signal or beacon receivable by an application server or host server. The tracking device communicates for example over an loT-network with the application server.

The EID generally comprises an internal battery to power the EID and the EID's are designed to limit power consumption in order to have a battery life time of at least a couple of years. Most of the time, the EID's are in a low-power operational state.

For example, when the EID's are manufactured, they are delivered in a so called battery-saving stock mode which can be construed as an idle state. In this battery-saving stock mode the battery power consumption is zero or very limited.

Typically, when ready to start using the EID, the EID needs to be woken-up from its idle state to for example at least read out the ID of the EID. Depending on the application the EID is used for, the ID of the EID can after the read out be associated with a serial number of an object the EID is used for.

Present EID's make use of for example Near-Field Communication technology, known as NFC. However NFC technology has a number of disadvantages.

For example for EID's such as tracking devices comprising multiple antennas, NFC technology can interfere with the antennas of the EID.

Implementation NFC technology requires also a lot of space and can also suffer from interference effects if metal is nearby. NFC-based scanning devices are generally also complicated.

The NFC technology is also limited in distance, general the scanning device has to be put at a distance of maximum a few cm from the EID. Especially if hundreds or thousands of EID's need to be read out, the process of scanning EID's can be time consuming.

Hence there is room for improving EID's and scanning devices for scanning EID's.

### Summary

It is an object of the present disclosure to provide an alternative EID and scanning device for securely scanning the EID, and wherein the EID and scanning device do not suffer the disadvantages of present EID's and present scanning devices as discussed above which for instance apply NFC technology.

The present invention is defined in the appended independent claims. The dependent claims define advantageous embodiments.

According to a first aspect of the present disclosure, an EID is provided comprising a power supply for powering the electronic identification device, one or more computer-readable storage media storing at least: i) a first identifier associated to the electronic identification device and ii) a computer program comprising computer executable instructions, a first antenna, a first radio module configured for transmitting and receiving encrypted RF messages with the first antenna at a channel frequency within a first frequency band, an RF detector configured for capturing RF signals with the first antenna while the first radio module is disabled or in a low-power state and for generating a trigger signal if an RF signal captured with the first antenna has a signal strength above a threshold value, and a processor adapted to execute the computer program if the trigger signal is generated by the RF detector.

The computer program when executed by the processor causes the electronic identification device to perform at least steps of: enabling operation of the first radio module and listening for RF messages with the first radio module, if an RF message is received with the first radio module then decrypting and authenticating the RF message received, and wherein decrypting and authenticating comprises at least executing a decryption algorithm and using a pre-defined cryptographic key, and if the decryption and authentication of the RF message received is successful then defining response data comprising at least the first identifier, encrypting the response data by executing an encryption algorithm and using the pre-defined cryptographic key, transmitting with the first radio module an RF response message comprising the encrypted response data.

As the EID comprises its proper power supply, such an EID can be construed as what is generally named an active EID. In embodiments, the power supply is a battery.

Advantageously, even if the first radio module is disabled, e.g. when the EID is in an idle state, the EID can still wirelessly be woken-up with the RF detector that is generating a trigger signal if a signal strength of a captured RF signal is above a threshold.

Advantageously, the RF messages transmitted by a scanning device can be either captured by the RF detector for generating the trigger signal or be received by the first radio module when the first radio module is enabled to operate.

Advantageously, the RF detector and the first radio module use the same antenna, such that the footprint of the EID can be kept small.

Advantageously, the trigger signal of the RF detector causes the electronic identification device to switch from an idle state wherein no RF messages can be transmitted or received to a wake-up state wherein RF messages can be transmitted or received with the first radio module.

Advantageously, as the EID can be woken up with the RF detector, the EID can remain in an idle state as long as needed and hence power consumption of the EID can be reduced.

Advantageously, the EID will not transmit a response message if the received message could not be authenticated with a cryptographic key, e.g. if the response message would have been transmitted by an intruder. Indeed, the EID uses a pre-agreed cryptographic key for decrypting messages received and for encrypting the response messages. In this way, data confidentiality is guaranteed and the device cannot be detected without authentication.

Advantageously, as the RF response message is encrypted with the same cryptographic key as used for decrypting RF messages received, a first EID can also receive RF response messages from a second neighbouring EID, and such a second EID can in response of receiving such a response message from the first EID transmit its own response message with its own identifier. In other words, one EID that is initially woken-up, for example through an RF message from a scanning device, can further wakeup neighbouring EID's with the response messages transmitted by the EID's. This can be named wake-up by hopping from one EID to another neighbouring EID. All response messages transmitted by the multiple EID's can be received by a scanning device and hence, in this way multiple EID 's can be read out by a scanning device in a fast way without increasing the power consumption of the EID's.

In embodiments, the computer program further causes the electronic identification device to perform, following decrypting the RF message: obtaining received data from the received RF message.

In embodiments the received data is any of or a combination of: random nonsense or non-repeating data, a first flag or a first sign indicating if the RF message received is either transmitted by a scanning device or transmitted by a further electronic identification device, a time stamp indicating a time when the received data was defined, a hopping indicator indicating how many times a RF response message is allowed to be transmitted in response to the received RF message, a second identifier.

In embodiments, the hopping indicator is a hopping counter. In these embodiments, the received message comprises a first hopping count value and the response message comprises a second hopping count value and the second hopping count value must exactly be one count lower than the first hopping count value.

According to a second aspect of the present disclosure, a scanning device is provided comprising at least, an antenna, a radio module configured for transmitting and receiving RF messages with the antenna, one or more computer-readable storage media storing at least a computer program comprising computer executable instructions for scanning electronic identification devices, and a processor adapted to execute the computer program.

The computer program of the scanning device, when executed, causes the scanning device to perform at least following steps: defining information data, encrypting the information data by executing an encryption algorithm and using a pre-defined cryptographic key, repetitively transmitting with the radio module the encrypted RF message, receiving with the radio module an RF response message from an electronic identification device, decrypting the received RF message by executing a decryption algorithm and using the pre-defined cryptographic key, obtaining response data comprising at least an identifier associated to the electronic identification device having transmitted the RF response message, and storing in the one or more computer-readable storage media the identifier associated to the electronic identification device having transmitted the RF response message.

In embodiments the RF messages transmitted by the scanning device and the RF response messages transmitted by the EID are Bluetooth Low Energy RF signals.

Advantageously, the scanning device of the present disclosure can be based on a smartphone supporting BLE. This is an advantage when compared to prior art NFC technology as smartphones are generally not equipped with NFC technology and/or the antennas used in smartphones for NFC are weak.

In embodiments, the RF messages transmitted by the scanning device and received by the electronic identification device and the RF response messages transmitted by the electronic identification device and received by the scanning device are any of the following type of messages: BLE messages, LoRa messages or WiFi messages.

### Short description of the drawings

These and further aspects of the present disclosure will be explained in greater detail by way of example and with reference to the accompanying drawings in which:
- Fig.1: schematically illustrates a block diagram of an embodiment of an electronic identification device according to the present disclosure together with an embodiment of a scanning device according to the present disclosure,
- Fig.2: schematically illustrates a further embodiment of an EID according to the present disclosure wherein the EID is configured as a tracking device configured for communicating with both the scanning device and with an application server via an loT network,
- Fig.3: schematically illustrates an embodiment of a scanning device comprising a display screen to display information data received from an EID,
- Fig.4: shows an isometric view of an embodiment of an EID according to the present disclosure wherein the EID is configured as a tracking device.

The drawings of the figures are neither drawn to scale nor proportioned. Generally, identical components are denoted by the same reference numerals in the figures.

### Detailed description of embodiments

The present disclosure will be described in terms of specific embodiments, which are illustrative of the disclosure and not to be construed as limiting. It will be appreciated by persons skilled in the art that the present disclosure is not limited by what has been particularly shown and/or described and that alternatives or modified embodiments could be developed in the light of the overall teaching of this disclosure. The drawings described are only schematic and are non-limiting.

Use of the verb "to comprise", as well as the respective conjugations, does not exclude the presence of elements other than those stated. Use of the article "a", "an" or "the" preceding an element does not exclude the presence of a plurality of such elements.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the disclosure described herein are capable of operation in other sequences than described or illustrated herein.

Reference throughout this specification to "one embodiment" or "an embodiment" means that a particular feature, structure or characteristic described in connection with the embodiments is included in one or more embodiment of the present disclosure. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one ordinary skill in the art from this disclosure, in one or more embodiments.

### Electronic identification device, general

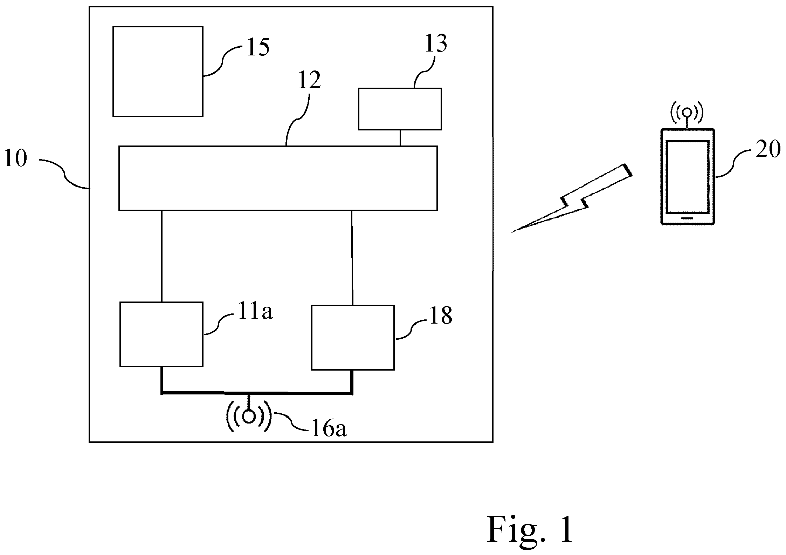

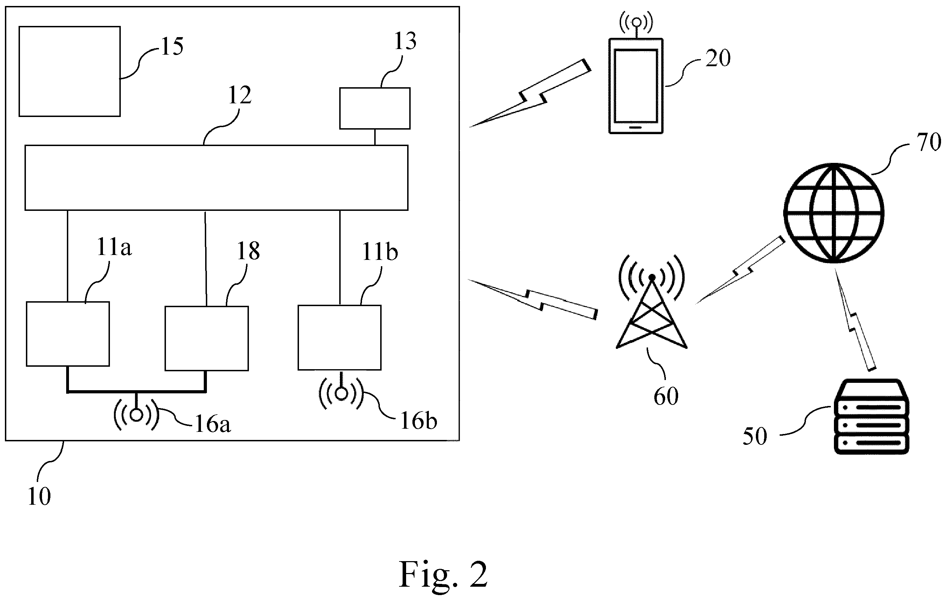

With reference to Fig.1 and Fig.2, block diagrams are shown of examples of embodiments of an electronic identification device, EID, 10 according to the present disclosure. On Fig.1 and Fig.2, a scanning device 20 according to the present disclosure for scanning the EID 10 is also schematically shown.

The EID 10 according to the present disclosure comprises at least a power supply for powering the electronic identification device, one or more computer-readable storage media 13 storing at least a first identifier associated to the EID and a computer program comprising computer executable instructions, a first antenna 16a, a first radio module 11a configured for transmitting and receiving RF messages with the first antenna at a channel frequency within a first frequency band, and an RF detector 18 configured for capturing RF signals with the first antenna while the first radio module is disabled or in a low-power state.

In other words, the RF detector is a detector that operates independently of the operation of the first radio module, i.e. even if the first radio module is disabled, the RF detector is operable for capturing RF signals and generating the trigger signal.

The first radio module being disabled has to be construed as the first radio module being inoperative or being deactivated. In embodiments, the first radio module is for example disabled when the EID is in a low power mode. In embodiments, the first radio module is disabled when the processor is in a low-power mode.

In embodiments, the RF detector 18 is configured for capturing RF signals with the first antenna while the first radio module is in a low-power state. In embodiments, the low power state is for instance a state wherein overall power consumption of the first radio module is reduced by for example not activating the first radio module or only activating the first radio module at pre-defined time intervals.

The RF detector is a detector that is configured for generating a trigger signal if an RF signal captured with the first antenna 16a has a signal strength above a threshold value.

The identifier, i.e. an ID, associated to the EID is for example a unique serial number or other code that allows to differentiate one EID from another. The one or more computer-readable storage media comprises for instance a nonvolatile memory, such as for example a flash memory or any other type of nonvolatile memory for storing the identifier.

A radio module typically comprises communication circuitry configured for transmitting and receiving RF messages. Generally, a radio module comprises an RF modulator and an RF demodulator.

The EID according to the present disclosure further comprises a processor 12 adapted to execute the computer program. The processor 12 executes the instructions of the computer program if the trigger signal is generated by the RF detector. Hence the trigger signal of the RF detector wakes-up the processor to start executing the computer program.

The computer program when executed by the processor causes the EID to perform a number of steps. The computer program when executed causes the EID to enabling operation of the first radio module and listening for RF messages with the first radio module, and if an RF message is received with the first radio module then decrypting and authenticating the RF message by at least executing a decryption algorithm and using a pre-defined cryptographic key.

If the decryption and authentication of the RF message received is successful, then the computer program further causes the EID to perform the following steps: defining response data comprising at least the first identifier, encrypting the response data by executing an encryption algorithm and using the pre-defined cryptographic key, and transmitting with the first radio module an RF response message comprising the encrypted response data.

The decryption and authentication of the RF message received is considered successful if no error is detected during decryption and authentication. In other words if no error is generated during either the process of performing the decryption or the process of authentication of the RF messages received, the decryption and authentication is considered successful.

The cryptographic key can for example be stored in the one or more computer-readable storage media of the EID.

In embodiments, the computer program when executed by the processor causes the EID to transmit a sequence of the RF response messages comprising the encrypted response data.

The RF detector 18 and the first radio module 11a are coupled with the same first antenna 16a, as schematically illustrated on Fig.1. In embodiments, the coupling of the RF detector 18 with the first antenna 16a is a permanent coupling. In other embodiments, an electronic switch can be used to de-couple the first antenna 16a from the RF detector when for instance the first radio module is enabled for operation.

As the RF detector is configured to operate when the first radio module is disabled, the RF detector can be construed as a wake-up detector to wake-up the EID, or more specifically wake-up the processor of the EID, in order to allow the EID to activate operation of the first module and transmit its ID.

In embodiments, when the trigger signal of the RF detector is generated the EID switches from an idle state to a wake-up state. The idle state refers to an internal state of the EID in which the identifier of the EID cannot be transmitted and the wake-up state refers to an internal state wherein the identifier of the EID may be received or transmitted. Hence, when in the idle state the first radio module is disabled. The internal states of the EID are controlled by the processor 12 of the EID. The processor is for example a CPU or a microprocessor.

In embodiments, when the trigger signal is generated by the RF detector and the processor executes the computer program, this causes the EID to disable operation of the RF detector and enable operation of the first radio module. The RF detector typically comprises a comparator, and the disabling of the RF detector can be performed by a computer instruction to disable the operation of the comparator of the RF detector.

In embodiments, as schematically illustrated on Fig.1 and Fig.2, the EID comprises a power supply 15 for powering the electronic identification device. Such an EID according to the present disclosure comprising a power supply, can be construed as what is generally named an active EID, in contrast to a passive EID that does not comprise a power supply, such as e.g. an RFID powered by a scanner through induction. In embodiments according to the present disclosure, the power supply of the EID is a battery such as a non-chargeable battery or a rechargeable battery.

As the power supply 15 of the EID is generally a battery, power consumption should be kept as low as possible in order to guarantee battery life time of several years, e.g. more than 5 years. Therefore the EID is generally kept in a low-power mode, also named sleep mode wherein for example radio modules are disabled for most of the time in order to keep the power consumption low. The battery is for example a LiMnO2 battery having a capacity of 1200 mAh.

For example, when active EID's are manufactured, they are generally delivered in a so called battery-saving stock mode, which can be construed as the idle state mentioned above. The battery stock mode or idle state can also be named a low-power sleep mode or a deep-sleep mode. When the EID is in this battery-saving stock mode, to keep the battery power consumption very limited, all radio modules of the tracking device are permanently disabled. Generally, when in stock mode, the only element of the EID that is operable is the RF detector, which is configured as a low-power RF detector consuming few power.

In embodiments, the RF messages sent by the scanning device 20 to the electronic identification device 10 can be construed as encrypted RF signals, which sometimes are also named beacon signals.

In embodiments, the computer program further causes the electronic identification device when executed by the processor to perform, after having decrypted the RF message: obtaining received data from the received RF message. Indeed the decryption transforms a cypher text into a plain text that can be read out and hence the data contained in the RF message can be obtained.

What data that are received by the EID can vary from embodiment to embodiment. In embodiments the received data is any of or a combination of: random data, a first flag or a first sign indicating if the RF message received is either transmitted by a scanning device or transmitted by a further electronic identification device, a time stamp indicating a time when the received data are defined, a hopping indicator indicating if an RF response message is allowed to be transmitted in response to the received RF message, a second identifier. The random data are generally what is named random nonsense or non-repeating data.

**In** embodiments, the received data is random data. Indeed as the purpose of the RF message is to wake-up the EID, the payload of the RF message does not necessarily need to comprise any specific data and hence can be randomly defined. In other embodiments, the received data can be a combination of random data and specified data such as for example a time stamp or a flag indication if RF message comes from a scanning device or from another EID.

In embodiments, the received data are for instance random nonsense or non-repeating data.

In embodiments wherein the received data comprises a time stamp indicating a time when the received data was defined, the steps performed by the EID of defining response data, encrypting the response data and transmitting the RF response message are only performed if a time period between an actual time measured by the electronic identification device when receiving the RF message and the time indicated on the time stamp is smaller than a pre-defined time lapse. For example the pre-defined time lapse can be set to one minute or any other suitable time. In this way, the EID will not respond to potential replays of RF messages transmitted by an intruder. The pre-defined time lapse can for example be a time value stored in the one or more computer-readable storage media of the EID.

In embodiments, the beacons transmitted by the scanning device 20 are Bluetooth Low Energy, BLE, signals. In other words, in these embodiments the RF messages sent by the scanning device are transmitted at a channel frequency in a range between 2.4 GHz and 2.5 GHz. Hence, in these embodiments, the frequency band of the first radio module of the EID is also configured to operate in a frequency band between 2.4 GHz and 2.5 GHz for receiving the RF message from the scanning device. Typically, the RF messages are FSK modulated. Hence in these embodiments, the RF messages received by the EID and the RF response messages transmitted by the EID are BLE messages.

In further embodiments, the RF messages transmitted by the scanning device 20, and hence the RF message received by the EID, are WiFi beacons or WiFi messages. In these embodiments also the RF response messages transmitted by the EID are WiFi beacons or WiFi messages.

In further embodiments, the RF messages transmitted by the scanning device 20, and hence the RF messages received by the EID, are LoRa messages in the frequency range of 432-435 MHz or 850-950 MHz. In these embodiments, the RF response messages transmitted by the EID are LoRa messages. LoRa is a proprietary spread-spectrum modulation technique derived from existing Chirp Spread Spectrum technology.

In other to increase security, the RF messages transmitted by the scanning device and the RF response messages transmitted by the EID are encrypted with the same pre-defined cryptographic key. Hence if an intruder device, not knowing the pre-defined cryptographic key, would transmit an RF signal, the EID will not respond by transmitting a response message.

Encryption and decryption algorithms are known in the art. For example, the encryption algorithm can be an AES cypher algorithm, and the cryptographic key can for example be a 128-bit key or any other suitable key known in the art.

The same encryption algorithms and cryptographic key are used both by the EID and the scanning device. In other words, the cryptographic key used by the EID and the scanning device is a shared key.

**In** embodiments, in addition to encryption or in combination with encryption, an authentication of the RF message received with the first radio module is performed. This ensures that the data transmitted have not been altered. For example, authenticating comprises performing a message integrity code MIC verification, which is known in the art, for example AES-CCM. In embodiments, to perform authentication, the scanning device provides the RF message with a specific code known as the Message Integrity Code, MIC. The MIC is generated by a method known to both the scanning device and the EID, and hence this MIC is unknown by an unauthorized device. The EID receiving the RF message from the scanning device will repeat the generation of the MIC code and if the MIC calculated by the EID matches the MIC provided by the scanning device, the data will be considered authentic.

In other embodiments, the authentication of the data is performed based on a checksum, generally being a fixed string of digits, also named hash value.

The decryption and authenticating of the RF message received with the first radio module can either be two separate processes using different algorithms or the decryption and authentication can be performed by a common algorithm. In other words, the way authentication and encryption are combined to create a secure communication between the EID and the scanning device can differ from embodiment to embodiment. In embodiments, so-called authenticated encryption is applied.

In embodiments, the RF response message transmitted by the EID is not only comprising the encrypted response data, but in addition the RF response message transmitted by the EID comprises besides the encrypted response data also a checksum or a message integrity code associated to the response data. In these embodiments, in addition to encrypting the response data, the computer program when executed causes the electronic identification device to provide a checksum or a message integrity code associated to the response data. Such a checksum or message integrity code can be generated by a data integrity authentication algorithm known in the art. The message integrity code or the checksum, allows the scanning device or another EID, when receiving the RF response message to not only decrypting the RF response message but also authenticate the RF response message. In this way, a secure data transmission from the scanning device to the EID or from one EID to another EID can be obtained.

If an RF message received by an EID originates from another EID, then the processor will proceed with the same steps discussed above, as when the RF message is originating from a scanning device. Indeed, in this case, the EID will also proceed with transmitting the RF response message comprising its ID by using its first radio module. In this way, the RF response message transmitted by the EID not only serves to transmit its ID to the scanning device but also serves to wake-up other EID's.

Indeed, as the RF response message transmitted by the EID is encrypted with the same cryptographic key as used for decrypting the RF messages received, a first EID can not only receive RF messages from a scanning device, but also receive RF response messages from a second neighbouring EID. The second EID can in response of receiving such an RF response message from the first EID transmit its own RF response message with its own identifier. In other words, a first EID that is initially woken-up, for example through an RF message from a scanning device, can further wakeup neighbouring EID's with the response messages transmitted by the EID's. This can be named wake-up by hopping from one EID to another neighbouring EID. As all RF response messages transmitted by the multiple EID's can be received by a scanning device, multiple EID 's can in this way be read out by a scanning device in a fast way.

In embodiments, the received data comprises a first flag or a first sign indicating if the RF message received is either transmitted by a scanning device or transmitted by a further electronic identification device. The flag is for example a binary 0-1 flag, wherein 0 indicates for example that the RF message received is transmitted from a scanning device and 1 indicates that the RF message received is transmitted from another EID. Another EID can for example be a neighbouring EID. Indeed multiple EID's can for example be packed together in a box.

In embodiments, the received data further comprises a hopping indicator, indicating if an RF response message is allowed to be transmitted in response to the received RF message. In this case, the steps performed by the EID of defining response data, encrypting the response data and transmitting the RF response message are only performed if the hopping indicator indicates that an RF response message is allowed to be transmitted. In this way the number of subsequent EID's that can be woken-up through hopping as discussed above, can be limited. For example one can limit the number of subsequent wake-up hops to 10.

In embodiments, the hopping indicator is a hopping counter. For example, as long as the count value of the hopping indicator is not equal to a minimum reference value, an RF response message is allowed to be transmitted by the EID and the response message transmitted will have a count value that is one count lower than the count value received. In embodiments, the minimum reference value is for example a zero value.

In these embodiments, when a first EID is woken-up by for example the scanning device, the RF response message transmitted by the first EID comprises a hopping indicator that is set one count lower than the count value of the received RF message. For example if the count value received from the scanning device is 10, then the first EID woken-up by the scanning device will transmit a response message with count value 9. When a second neighbouring EID is woken-up by the RF messages from the first EID, the RF response message transmitted by the second EID will have a hopping indicator set to 8, i.e. one count lower than the count value received. As long as the hopping factor is not zero, this is an indication that an RF response message is still allowed to be transmitted by the EID. Hence, when finally an EID receives an RF message from a neighbouring EID wherein the hopping indicator is set to zero, then this EID will not transmit any RF response message in response to the RF message received with hopping indicator zero.

In embodiments, the RF message transmitted by the scanning comprises an initial hopping value that is received by the EID. The initial value set by the scanning device indicates the maximum number of hops that can be performed. The initial value set is a value that is larger than the above mentioned minimum reference value. If the initial hopping value from the scanning device is for example set to 1 and the minimum reference value is zero then the EID having received the RF message from the scanning device will not be able to further wake-up a neighbouring EID. In embodiments the minimum reference value is for example a zero value but in other embodiments it can be another value, as long as the initial value is larger than the minimum reference value.

In summary, the received data from the received RF message comprises a first hopping value indicating a number of times an RF response message is still allowed to be transmitted in response to the received RF message and the response data of the RF response message comprises a second hopping value, and wherein the second hopping value is set one count value lower than the first hopping count value.

In embodiments, the steps of defining response data, encrypting the response data and transmitting the RF response message are only performed if the first hopping value from the received RF message is different from a minimum reference value, and wherein the minimum reference value is for example a zero value. If the first hopping value of the received RF message is equal to the minimum reference value, then the EID will not transmit an RF response message.

In embodiments, the signal strength of the RF response messages transmitted by the EID is adapted to limit the range of the transmitted RF response messages.

In embodiments, the response data of the RF response message transmitted by the EID comprises a second flag or a second sign indicating that the response data are defined by an electronic identification device; and hence not by a scanning device. This flag is the same flag discussed above for the received data of the received RF messages from e.g. the scanning device. For example by setting a binary 0-1 flag to 1, this is for example an indication that the RF response message is transmitted by an EID.

In embodiments, the signal strength of the RF messages transmitted by the scanning device can be set in such a way that for example one has to bring the scanner device close to a first EID in order the first EID can receive the RF message. The scanner device can then for instance only wake-up the first EID and the remaining EID's can be woken-up in sequence by the hopping process by other EID's. This is an advantageous feature when for example hundreds or thousands of EID's are packed together and a read out of the ID of each of the EID's of the pack needs to be performed. In embodiments, the EID can also ignore messages with reduced signal strength to limit the scanning distance.

In embodiments, the information data of the RF message transmitted by the scanning device comprises a specific ID of a selected EID. In this case, only the EID having the same ID as the ID indicated in the information data of the RF message from the scanning device will wake-up in response to the RF message received from the scanning device. This allows the scanning device to selectively wake-up a specific EID identified through its ID.

In embodiments, when the selected EID is woken-up by the scanning device, it can then further wake-up other EID's as discussed above based on the transmission of its RF response message that can be received by another EID.

In embodiments, when the selected EID is woken-up by the scanning device, i.e. when the received data in the RF message comprises the same ID as the ID of the EID having received the RF message, the EID having received such an RF message comprising his ID can then further establish a point-to-point communication link with the scanning device or take other actions.

In embodiments, wherein the received data comprise a first flag that indicates that the RF message is transmitted by a scanning device and if the received data further comprises an identifier, i.e. an identifier selected by the scanning device, that is equal to the first identifier, i.e. the identifier of the EID having received the RF message, then the steps of defining response data, encrypting the response data and transmitting the RF response message are only performed if a measured signal strength of the RF message received is above a proximity threshold level. In this way, the EID will only transmit its RF response message when the scanning device is in proximity of the EID and hence the EID having the ID selected by the scanning device. The proximity threshold level is a level defined depending on how close the scanning device should be brought to the EID before the EID transmits its RF response message. This allows to uniquely identify an EID even if multiple EID's are present.

In embodiments, wherein the computer program of the EID when executed causes the electronic identification device to perform, after having transmitted the RF response message, a further step of receiving an acknowledge receipt message or an instruction message. In embodiments, the instruction message is for example an instruction message for joining the network and/or establishing through the second radio module a communicating link with the application server.

In embodiment, the scanning device is configured to reduce the scanning range by increasing a signal strength threshold. The signal strength threshold is a threshold for determining if RF messages received are accepted or not. Increasing the signal strength threshold will ensure EID's that only messages from EID's in close proximity are received. This allows multiple scanners to operate within signal range of other active scanners.

In embodiments, the scanning device can be configured to identify a single EID. This by for example reducing the allowed hops to 1 and/or increasing the required signal strength to a very close proximity of less than ten centimeters. The scanning device can also ensure no other EID's are received within a predefined timeslot ensuring that the ID of the EID is read out without ambiguity. This is required to allow a unique EID be identified in the presence of multiple EID's

In embodiments, to conserve power or avoid detection, the EID identification functionality can be disabled via other communication channels.

### RF detector

The RF detector must be construed as a low-power RF signal detector, generally also known as an RF envelope detector.

The RF detector typically comprises a filter for attenuating RF signals having frequencies outside the frequency band used by the scanning device, an amplifier, and a comparator for comparing the amplitude of the captured RF signal with a threshold value. The RF detector can also be named RF power detector as it generates a trigger signal if an RF signal received is above a power level.

As mentioned above, the RF detector is coupled to the same antenna as the first radio module. The antenna is for example a 2.4 GHz antenna. In this way, the additional footprint of the EID by adding the RF detector remains small.

In embodiments, the RF detector is able to detect 2.4 GHz RF signals larger than -30dB using an RF transistor and using for example a commercial available lower power comparator from Nordic. The additional power consumption of the RF detector is low and is for example about 1 uA to 2uA. This power to power the RF detector is provided by the power supply 15, e.g. a battery, of the EID 10. The RF detector amplifies the RF signals it receives and if enough power is coupled it triggers the low power comparator.

In embodiments, the RF signal is coupled to an RF transistor via a high pass filter. Typically, the impedance is matched to get optimal coupling. The impedance matching can also be optimized to minimize interference of normal transmission or reception of the first radio.

In embodiments, the comparator of the RF detector can be disabled so as to disable the RF detector functionality.

The RF detector is also known as an envelope detector and is for example disclosed by Pham et al. in Electronics 2021, 10, 1078. The RF envelope detector disclosed by Pham et al. is a detector suitable for use with the electronic identification device according to the present disclosure.

In embodiments, the threshold value used by the comparator is a value stored in one of the one or more computer-readable storage media 13 of the EID.

In embodiments, the RF detector is configured to dynamically adjust the threshold of the comparator as function of a noise level or interference detected.

When in operation, when the scanning device transmits RF messages, e.g. BLE beacon signals, the RF detector will capture these messages and if the scanning device is within a detectable range, the RF detector will generate the trigger signal if the signal strength of the RF messages is above a threshold. In other words, the same RF messages that can be received by the first radio module and be decrypted, are also used to trigger the RF detector when for instance the first radio module is disabled.

### Scanning device

The scanning device is to be construed as a device for wirelessly reading out data from the EID, for instance the scanning device is configured to at least wirelessly reading out the identifier of the EID. In embodiments, the scanning device can also establish a point-to-point communication link with the EID to for example sent further instructions to the EID following the readout of the EID identifier.

The scanning device for scanning an EID according to the present disclosure comprises at least an antenna, a radio module configured for transmitting and receiving RF messages with the antenna, one or more computer-readable storage media storing at least a computer program comprising computer executable instructions for scanning electronic identification devices, and a processor for executing the computer program.

The processor when executing the computer program of the scanning device causes the scanning device to repetitively transmit encrypted RF messages with the radio module. The information data of the RF messages are encrypted by executing an encryption algorithm and using a pre-defined cryptographic key. This pre-defined cryptographic key is the same key used by the EID's that need to be scanned.

As discussed above, in embodiments, the RF messages transmitted by the scanning device are encrypted signals, e.g. BLE signals. In these embodiments, the radio module of the scanning device is a BLE radio module configured for operating in frequency band in a range between 2.4 GHz and 2.5 GHz.

The processor when executing the computer program further causes the scanning device to receive with its radio module an RF response message from the electronic identification device. This RF response message from the EID comprises response data, and wherein the response data comprises at least an identifier associated to the electronic identification device having transmitted the RF response message.

The processor when executing the computer program further causes the scanning device to decrypt the encrypted RF response message received from the EID by executing a decryption algorithm and using the pre-defined cryptographic key, obtaining response data comprising at least the identifier associated to the EID that has transmitted the RF response message, and to store in one of the computer-readable storage media the identifier associated to the EID having transmitted the RF response message.

In embodiments, in addition to encrypting the information data, the computer program of the scanning device, when executed, causes the scanning device to execute a data integrity authentication algorithm generating a checksum or a message integrity code associated to the information data. Hence, the transmitted RF message by the scanning device comprises besides the encrypted information data also the checksum or the message integrity code associated to the information data.

In embodiments, the one or more computer-readable storage media of the scanning device is storing the pre-defined cryptographic key used by the scanning device for encrypting and decrypting respectively the RF messages transmitted and the RF messages received.

In embodiments, the scanning device comprises a display screen to visualize the response data received from the EID, including a visualization of the identifier of the EID.

In embodiments, as discussed above, the information data comprises random data, e.g. random nonsense or non-repeating data.

Indeed, as the purpose of transmitting the RF message is initially to wake-up an EID, in embodiments, the content of the message can be random data generated by a data generator of the scanning device.

In other embodiments, the information data is combination of random data and specifically defined data.

In embodiments, the information data comprises a flag or a sign indicating that the information data are defined by a scanning device and not be an electronic identification device. In this way, when the EID receives an RF message it knows if the RF message was transmitted from a scanning device or not, and instead was transmitted by another EID.

In embodiment, the information data comprises a time stamp indicating a time when the information data is defined by the scanning device. As discussed above, in this way, the EID receiving an RF message can decide based on a time elapsed between receiving the RF message and the time the RF message is defined, decide to transmit an RF response message or not.

In embodiments, the information data comprise a hopping count value. As discussed above, the hopping count value is a value that allows to specify how many times an EID having initially received an RF message from the scanning device can further sequentially wake-up other EID's by transmitting its RF response message.

In embodiments, the steps performed by the scanning device of decrypting the received RF message, obtaining response data and storing the identifier, are only performed if a measured signal strength of the RF response message received is above a proximity threshold level. In this way, false RF messages, e.g. received from other nearby scanning devices, are ignored. The proximity threshold level is a level determined in accordance with a required minimum distance the scanning device is to be positioned with respect to the EID in order to receive a valid response message.

In embodiments the scanning device 20 is a mobile device such as for example a smartphone, a tablet PC or any other wearable device that is adapted to transmit RF messages such as for example 2.4 GHz encrypted RF beacons. The mobile device further comprises an application program programmed for performing the above discussed functions of transmitting the RF messages, i.e. the encrypted RF beacons, receiving and decrypting the RF response message received from the EID 10 and storing the identifier of the EID in the memory of the mobile device.

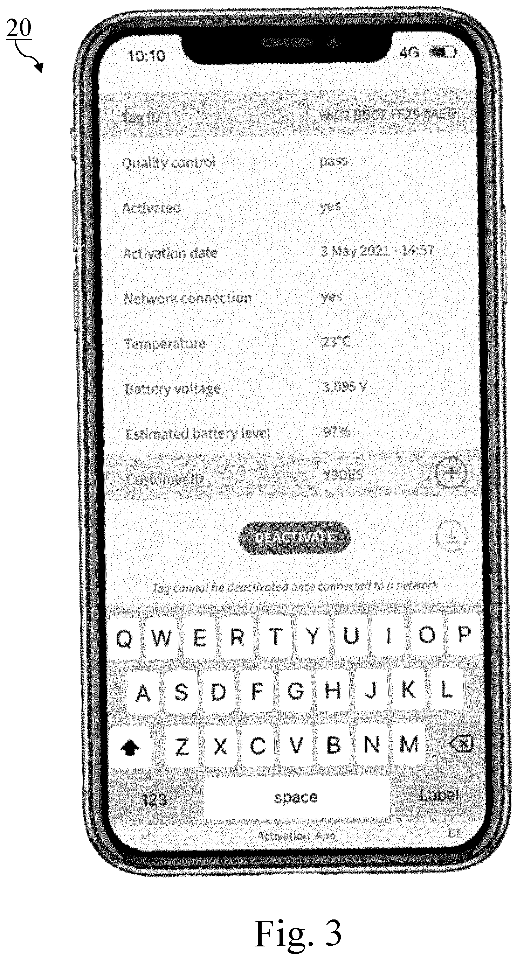

In Fig.3, an example of an embodiment of a scanning device is shown wherein the scanning device is developed based on a smartphone. Besides the identifier of the EID, other information received from the EID can be displayed on the screen, such as the temperature of the EID, the voltage and battery level of the battery of the EID and for example indications if the EID is connected with a network or not.

When an EID is used for the first time, the ID of the EID is read out with the scanning device as discussed above. Thereafter, depending on the application the EID is used for, a point-to-point communication link between the scanning device and the EID can be established to for example transmit instructions from the scanning device to the EID or for transmitting additional information from the EID to the scanning device.

In embodiments, when the scanning device has received an RF response message from an EID, it will establish a point-to-point communication link with the EID having transmitted the RF response message and transmit, with its radio module, an acknowledge receipt message or an instruction message to the EID having transmitted the RF response message.

In embodiments, an instruction message sent from the scanning device to the selected EID, i.e. selected based on the identifier of the EID, is a request for establishing a point-to-point communication link with the EID having transmitted the RF response message.

### Tracking device

In embodiments, the EID is further configured for forming a device for tracking objects, known as a tracking device. According to the present disclosure a tracking device is provided comprising an EID as discussed above. Generally, the tracking device is an active EID comprising its proper power supply which is generally a non-rechargeable battery or a rechargeable battery.

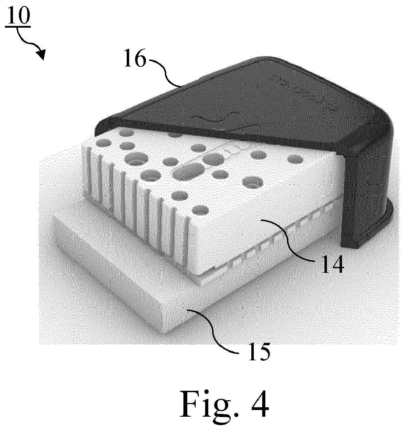

Typically, the tracking device is encapsulated in a housing and attachable to an object or insertable in an object that needs to be tracked. The tracking device typically communicates with an application server over a loT network. With reference to Fig.4, an isometric view of an embodiment of an EID according to the present disclosure wherein the EID is configured as a tracking device, is shown. The processor of the EID and one or more computer-readable storage media are generally part of a system-on-chip, SOC 14. In this example, the protecting housing is indicated with reference number 16 and hence the housing is covering the battery 15, the SOC 14 and the antennas of the tracker device.

An example of an application making use of tracking devices is the management of vehicles of a micro-mobility provider, e.g. a provider of dock-less electrical vehicles. For each vehicle, e.g. a bike, a tracking device is covertly integrated. In these embodiments, the second radio module is used to communicated with the application server. For example, when a vehicle is missing, an application on the application server can determine a rough position of the missing vehicle based on for example the known locations of the gateways of the network and/or based on received signal strengths. For this type of applications, the client, i.e. the end user, makes use of multiple EID's and each of these EID's needs to be woken-up and the ID needs to be read out when using the EID's for the first time. The end use can then associated the ID of the EID to for example a reference number of a bike.

As discussed above, when EID's are manufactured they are provided to the end-user while being in a low-power idle state, which also can be named stock-mode. With the scanning device 20 according to the present disclosure and the EID's 10 according to the present disclosure, multiple EID's are being woken-up and the ID's of multiple EID's can be read out at the same time.

An EID configured as a tracking device is schematically illustrated on Fig.2. In embodiments wherein the EID is a tracking device, the EID comprises a second antenna 16b and a second radio module 11b configured to for example communicate over a network with an application server 50. The network is schematically illustrated on Fig.2 with network gates 60 and a network server 70, known in the art. In these embodiments, the second radio module 11b of the EID 10 is operable for transmitting and receiving RF messages with the second antenna 16b at a channel frequency within a second frequency band.

In embodiments, the second frequency band of the second radio module is not overlapping with the first frequency band of the first radio module. For example, in embodiments, the second frequency band is a range between 400 MHz and 1.0 GHz.

In embodiments, the tracking device makes use of a LoRaWAN network architecture to communicate with the application server. In these embodiments, the gateways 60 are connected to the network server via standard IP connections and act as a bridge, for converting RF packets to IP packets and vice versa. The application server 50 is coupled with the network via standard IP connections. In these embodiments, the wireless communication of the tracking device takes advantage of the long range characteristics of the LoRa physical layer.

Typically, when the tracking device is connected to the network, at regular time intervals, e.g. a few times per 24 hours, the tracking device is sending an alive message RM_{A} to an application server and/or is listening for a potential message M_{A} from the application server. In embodiments, after sending an alive message, i.e. an uplink message RM_{A}, the tracking device opens a listening time slot for receiving a potential message from the application server, i.e. a downlink M_{A}. The number of times the tracking device is sending an uplink message can be programmed depending on the application the tracking device is used for. The frequency of receiving a downlink and/or sending an uplink can range for example from once every 30 minutes to once per 24 hours.

In embodiments, the second radio module of the tracking device is a radio module for long-range low-power communication. Such a long-range low-power radio module distinguishes from a radio module for short-range communication using for example Bluetooth technology. The long-range low-power radio module also distinguished from high-power cellular communication technology.

In embodiments, the second radio module, being a long-range low-power radio module, is configured for sending and receiving RF messages at a carrier frequency that is comprised in a range between 400 MHz and 1GHz.

The network used by the tracking device is not limited to a LoRaWAN network and the network can be any suitable loT network.

Hence the modulation technique of the second radio module to communicate over a network varies depending on the type of loT network used. In embodiments, the second radio module uses a modulation technique that is selected from any of: frequency shift keying FSK, binary phase shift keying BPSK, Gaussian frequency shift keying GFSK, spread spectrum modulation, chirp spread spectrum CSS modulation. An example of CSS modulation is known as LoRa.

In embodiments wherein the EID is a tracking device and when the tracking device is used for the first time, the ID of the tracking device is read out with the scanning device as discussed above. In embodiments, the scanning device will transmit an acknowledgement of receipt message to the tracking device or an instruction message to activate the tracking device to for example join the network.

In embodiments, when the tracking device receives from the scanning device an acknowledgement of receipt message or an instruction message to activate the tracking device, the tracking device joins the network using the second radio module.

In embodiments, if the tracking device does not receive an acknowledgement of receipt message or an instruction message to activate the tracking device within a pre-defined time interval, the tracking device will switch back from the wake-up state to the idle state.

In embodiments, the scanning device is configured to transmit a deactivate instruction message to the EID. The EID, when receiving such a deactivate message will switch back to the idle state, i.e. a state wherein no RF messages can be transmitted, and wherein the EID can only be woken-up again through the trigger signal of the RF detector. In embodiments wherein the EID is a tracking device, the deactivation of the EID is only possible as long as the EID has not joined the network.

### Clauses

Here below, text is provided in the form of clauses. The clauses comprise characterizations indicating a variety of options, features, and feature combinations that can be used in accord with the teachings of the present disclosure. Alternate characterizations of the ones given, but consistent with the descriptions herein above, are possible. In summary, according to the present disclosure, the following clauses could for instance be claimed:
1. An electronic identification device (10) comprising
   - a power supply (15) for powering the electronic identification device,
   - one or more computer-readable storage media (13) storing at least a first identifier associated to the electronic identification device, and a computer program comprising computer executable instructions,
   - a first antenna (16a),
   - a first radio module (11a) configured for transmitting and receiving RF messages with said first antenna (16a) at a channel frequency within a first frequency band,
   - an RF detector (18) configured for capturing RF signals with said first antenna (16a) while said first radio module is disabled or in a low-power state, and wherein the RF detector is further configured for generating a trigger signal if an RF signal captured with said first antenna (16a) has a signal strength above a threshold value,
   - a processor (12) adapted to execute said computer program if said trigger signal is generated by the RF detector, and wherein said computer program when executed causes the electronic identification device to perform at least steps of:
      - enabling operation of the first radio module (11a) and listening for RF messages,
      - if an RF message is received with the first radio module then decrypting and authenticating the RF message received, and wherein decrypting and authenticating comprises at least executing a decryption algorithm and using a pre-defined cryptographic key,
      - if the decryption and authentication of the RF message received is successful then:
         i) defining response data comprising at least said first identifier
         ii) encrypting the response data by executing an encryption algorithm and using said pre-defined cryptographic key,
         iii) transmitting with said first radio module an RF response message comprising said encrypted response data.
2. The electronic identification device according to any of previous clauses wherein after executing of the decryption algorithm, said computer program further causes the electronic identification device to perform:
   - obtaining received data from said received RF message.
3. The electronic identification device according to clause 2 wherein said received data comprises random data, preferably random nonsense or non-repeating data.
4. The electronic identification device according to clause 2 or clause 3 wherein said received data comprises a time stamp indicating a time when the received data are defined, and wherein said steps of defining response data, encrypting the response data and transmitting the RF response message are only performed if a time period between an actual time measured by the electronic identification device when receiving the RF message and the time indicated on the time stamp is smaller than a pre-defined time lapse.
5. The electronic identification device according to any of clauses 2 to 4 wherein said received data comprises a first flag or a first sign indicating if
   the RF message received is either transmitted by a scanning device or
   transmitted by a further electronic identification device.
6. The electronic identification device according to clause 5 wherein if said first flag indicates that the RF message is transmitted by a scanning device and if the received data further comprise a second identifier that is equal to said first identifier, then said steps of defining response data, encrypting the response data and transmitting the RF response message are only performed if a measured signal strength of the RF message received with the first radio module is above a proximity threshold level.
7. The electronic identification device according to clause 5 or clause 6 wherein if said first flag indicates that the RF message received is transmitted by a further electronic identification device, then the received data comprises a hopping indicator indicating if an RF response message is allowed to be transmitted in response to the received RF message, and wherein said steps of defining response data, encrypting the response data and transmitting the RF response message are only performed if said hopping indicator indicates that an RF response message is allowed to be transmitted.
8. The electronic identification device of any of previous clauses wherein said response data comprise a second flag or a second sign indicating that the response data are defined by an electronic identification device.
9. The electronic identification device of any of previous clauses wherein said first frequency band is in a range between 2.4 GHz and 2.5 GHz, preferably said first radio module is configured for transmitting and receiving Bluetooth Low Energy RF signals.
10. The electronic identification device of any of previous clauses wherein said RF detector comprises an RF filter for attenuating RF signals having frequencies outside said first frequency band, an amplifier, and a comparator for comparing the signal strength of the captured RF signal with the threshold value.
11. The electronic identification device of any of previous clauses wherein said computer program when executed further causes the electronic identification device to perform a step of: disabling operation of the RF detector.
12. The electronic identification device according to any of previous clauses further comprising
   - a second antenna,
   - a second radio module (11b) configured for communicating over a network with an application server, wherein the second radio module is operable for transmitting and receiving RF messages with said second antenna at a channel frequency within a second frequency band, preferably the second frequency band is not overlapping with said first frequency band.
13. The electronic identification device according to clause 12 wherein the second frequency band is a range between 400 MHz and 1.0 GHz.
14. The electronic identification device according to any of previous clauses wherein said trigger signal when generated by the RF detector causes the electronic identification device to switch from an idle state wherein no RF messages can be transmitted or received to a wake-up state wherein RF messages can be transmitted or received with the first radio module.
15. The electronic identification device according to any of previous clauses wherein said RF detector is configured for dynamically adjusting said threshold value as function of a noise level or interference detected.
16. The electronic identification device according to anyone of previous clauses wherein said decrypting and authenticating of the RF message received further comprises executing a data integrity authentication algorithm, preferably said data integrity authentication algorithm comprises generating a checksum or a message integrity code associated to the received RF message.
17. The electronic identification device according to anyone of previous clauses wherein said one or more computer-readable storage media (13) is storing said pre-defined cryptographic key.
18. The electronic identification device according to anyone of previous clauses wherein in addition to encrypting the response data, the computer program, when executed, causes the electronic identification device to perform:
   generating a checksum or a message integrity code associated to the response data and wherein the RF response message transmitted comprises besides the encrypted response data also the checksum or
   message integrity code associated to the response data.
19. A scanning device for scanning an electronic identification device comprising at least:
   - an antenna,
   - a radio module configured for transmitting and receiving RF messages with said antenna,
   - one or more computer-readable storage media storing at least a computer program comprising computer executable instructions for scanning electronic identification devices,
   - a processor adapted to execute said computer program, and wherein said computer program when executed causes the scanning device to perform at least following steps:
      - defining information data,
      - encrypting the information data by executing an encryption algorithm and using a pre-defined cryptographic key,
      - repetitively transmitting with the radio module and RF message comprising the encrypted information data,
      - receiving with the radio module an RF response message from an electronic identification device,
      - decrypting the received RF message by executing a decryption algorithm and using said pre-defined cryptographic key
      - obtaining response data comprising at least an identifier associated to the electronic identification device having transmitted the RF response message, and
      - storing in said one or more computer-readable storage media the identifier associated to the electronic identification device having transmitted the RF response message.
20. The scanning device according to clause 19 further comprising a display screen and wherein the computer program when executed with the processor causes the scanning device to display on the display screen at least the identifier associated to the electronic identification device having transmitted the RF response message.
21. The scanning device of clause 19 or 20 wherein said information data comprises random data, preferably the random data are random nonsense or non-repeating data.
22. The scanning device according to any of clauses 19 to 21 wherein said information data comprises a flag or a sign indicating that the information data are defined by a scanning device.
23. The scanning device according to any of clauses 19 to 22 wherein the information data comprises a time stamp indicating a time when the information data is defined.
24. The scanning device according to any of clauses 19 to 23 wherein the computer program when executed with the processor further causes the scanning device in response to receiving the RF response message to perform:
   - transmitting, with the radio module, an acknowledge receipt message or an instruction message to the electronic identification device having transmitted the RF response message.
25. The scanning device according to clause 24 wherein said instruction message is a request for establishing a point-to-point communication link with the electronic identification device having transmitted the RF response message.
26. The scanning device of any of clauses 19 to 25 wherein said radio module is configured for transmitting and receiving Bluetooth Low Energy RF signals.
27. The scanning device according to any of clauses 19 to 26 wherein said steps of decrypting the received RF message, obtaining response data and storing the identifier are only performed if a measured signal strength of the RF response message received is above a proximity threshold level.
28. The scanning device according to any of clauses 19 to 27 wherein said one or more computer-readable storage media is storing said pre-defined cryptographic key.
29. The scanning device according to any of clauses 19 to 28 wherein in addition to encrypting the information data, the computer program when executed causes the scanning device to execute a data integrity authentication algorithm generating a checksum or a message integrity code associated to the information data,
   and wherein the transmitted RF message comprises besides the encrypted information data also the checksum or the message integrity code associated to the information data.
30. A tracking device comprising an electronic identification device according to any of clauses 1 to 18.
31. The electronic identification device according to any of clauses 12 to 18. wherein the computer program when executed causes the electronic identification device to perform, after having transmitted the RF response message, a further step of:
   - receiving an acknowledge receipt message or an instruction message, preferably wherein the instruction message is an instruction for joining the network and/or establishing through the second radio module a communicating link with the application server.
32. The electronic identification device according to any of clauses 1 to 8
   wherein said RF messages received and said RF response messages transmitted are any of the following type of messages: BLE messages, LoRa messages or WiFi messages.
33. The scanning device according to any of clauses 19 to 25 wherein said RF messages transmitted and said RF response messages received are any of the following type of messages: BLE messages, LoRa messages or WiFi messages.
34. The electronic identification device according to any of clauses 1 to 8 wherein said first radio module is configured for transmitting and receiving any of: BLE messages, LoRa messages or WiFi messages.
35. The scanning device according to any of clauses 19 to 25 wherein said radio module is configured for transmitting and receiving any of BLE messages, LoRa messages or WiFi messages.
36. The electronic identification device according to any of clauses 2 to 6 wherein the received data comprises a first hopping count value, and wherein said steps of defining response data, encrypting the response data and transmitting the RF response message are only performed if said first hopping count value is different from a minimum reference value, preferably said minimum reference value is a value of zero.
37. The electronic identification device according to clause 36 wherein if said first hopping count value is different from the minimum reference value then the response data comprises a second hopping count value and wherein the second hopping count value is set one count lower than the first hopping count value.
38. The scanning device according to any of clauses 19 to 29 wherein said information data comprises a hopping count value.

## Claims

1. An electronic identification device (10) comprising
• a power supply (15) for powering the electronic identification device,
• one or more computer-readable storage media (13) storing at least a first identifier associated to the electronic identification device, and a computer program comprising computer executable instructions,
• a first antenna (16a),
• a first radio module (11a) configured for transmitting and receiving RF messages with said first antenna (16a) at a channel frequency within a first frequency band,
• an RF detector (18) configured for capturing RF signals with said first antenna (16a) while said first radio module is disabled or in a low-power state, and wherein the RF detector is further configured for generating a trigger signal if an RF signal captured with said first antenna (16a) has a signal strength above a threshold value,
• a processor (12) adapted to execute said computer program if said trigger signal is generated by the RF detector, and wherein said computer program when executed causes the electronic identification device to perform at least steps of:
- enabling operation of the first radio module (11a) and listening for RF messages,
- if an RF message is received with the first radio module then decrypting and authenticating the RF message received, and wherein decrypting and authenticating comprises at least executing a decryption algorithm and using a pre-defined cryptographic key,
- if the decryption and authentication of the RF message received is successful then:
i) defining response data comprising at least said first identifier
ii) encrypting the response data by executing an encryption algorithm and using said pre-defined cryptographic key,
iii) transmitting with said first radio module an RF response message comprising said encrypted response data.

2. The electronic identification device according to claim 1 wherein after executing of the decryption algorithm, said computer program further causes the electronic identification device to perform:
- obtaining received data from said received RF message, preferably said received data comprises any of or a combination of: random nonsense or non-repeating data, a time stamp indicating a time when the received data are defined, a first flag or a first sign indicating if the RF message received is either transmitted by a scanning device or transmitted by a further electronic identification device.

3. The electronic identification device according to claim 2 wherein the received data comprises a first hopping count value, and wherein said steps of defining response data, encrypting the response data and transmitting the RF response message are only performed if said first hopping count value is different from a minimum reference value, preferably the minimum reference value is a value of zero, and wherein if said first hopping count value is different from the minimum reference value then said response data comprises a second hopping count value and wherein the second hopping count value is set one count lower than the first hopping count value.

4. The electronic identification device according to claim 2 wherein said received data comprises a second identifier and a first flag or a first sign indicating if the RF message received is either transmitted by a scanning device or transmitted by a further electronic identification device, and wherein if said first flag indicates that the RF message is transmitted by a scanning device and if said second identifier is equal to said first identifier, then said steps of defining response data, encrypting the response data and transmitting the RF response message are only performed if a measured signal strength of the RF message received with the first radio module is above a proximity threshold level.

5. The electronic identification device of any of previous claims wherein said response data comprise a second flag or a second sign indicating that the response data are defined by an electronic identification device.

6. The electronic identification device of any of previous claims wherein said first radio module is configured for transmitting and receiving Bluetooth Low Energy RF signals.

7. The electronic identification device according to any of previous claims further comprising
• a second antenna,
• a second radio module (11b) configured for communicating over a network with an application server, wherein the second radio module is operable for transmitting and receiving RF messages with said second antenna at a channel frequency within a second frequency band, preferably the second frequency band is not overlapping with said first frequency band, preferably the first frequency band is in a range between 2.4 GHz and 2.5 GHz and the second frequency band is a range between 400 MHz and 1.0 GHz.

8. The electronic identification device according to any of previous claims wherein said trigger signal when generated by the RF detector causes the electronic identification device to switch from an idle state wherein no RF messages can be transmitted or received to a wake-up state wherein RF messages can be transmitted or received with the first radio module.

9. The electronic identification device according to anyone of previous claims wherein said decrypting and authenticating of the RF message received further comprises executing a data integrity authentication algorithm, preferably said data integrity authentication algorithm comprises generating a checksum or a message integrity code associated to the received RF message.

10. The electronic identification device according to anyone of previous claims wherein in addition to encrypting the response data, the computer program, when executed, causes the electronic identification device to perform:
generating a checksum or a message integrity code associated to the response data and wherein the RF response message transmitted comprises besides the encrypted response data also the checksum or
message integrity code associated to the response data.

11. A scanning device for scanning an electronic identification device comprising at least:
• an antenna,
• a radio module configured for transmitting and receiving RF messages with said antenna,
• one or more computer-readable storage media storing at least a computer program comprising computer executable instructions for scanning electronic identification devices,
• a processor adapted to execute said computer program, and wherein said computer program when executed causes the scanning device to perform at least following steps:
- defining information data,
- encrypting the information data by executing an encryption algorithm and using a pre-defined cryptographic key, preferably wherein the one or more computer-readable storage media is storing the pre-defined cryptographic key,
- repetitively transmitting with the radio module and RF message comprising the encrypted information data,
- receiving with the radio module an RF response message from an electronic identification device,
- decrypting the received RF message by executing a decryption algorithm and using said pre-defined cryptographic key
- obtaining response data comprising at least an identifier associated to the electronic identification device having transmitted the RF response message, and
- storing in said one or more computer-readable storage media the identifier associated to the electronic identification device having transmitted the RF response message.

12. The scanning device of claim 11 wherein said information data comprises any of or a combination of: random nonsense or non-repeating data, a time stamp indicating a time when the information data is defined, a flag, a sign indicating that the information data are defined by a scanning device, or a hopping count value.

13. The scanning device according to claim 11 or claim 12 wherein the computer program when executed with the processor further causes the scanning device in response to receiving the RF response message to perform:
- transmitting, with the radio module, an acknowledge receipt message or an instruction message to the electronic identification device having transmitted the RF response message, preferably wherein the instruction message is a request for establishing a point-to-point communication link with the electronic identification device having transmitted the RF response message.

14. The scanning device of any of claims 11 to 13 wherein said radio module is configured for transmitting and receiving Bluetooth Low Energy RF signals.

15. The scanning device according to any of claims 11 to 14 wherein in addition to encrypting the information data, the computer program when executed causes the scanning device to execute a data integrity authentication algorithm generating a checksum or a message integrity code associated to the information data, and wherein the repetitively transmitted RF messages comprise besides the encrypted information data also the checksum or the message integrity code associated to the information data.
